# EUROPEAN PATENT APPLICATION

(11) **EP 3 467 810 A1**
(43) Date of publication of application: **10.04.2019**
(21) Application number: 18197470.0
(22) Date of filing: 28.09.2018
(51) Int. Cl.: G09F 3/20, G06Q 10/08

(54) **METHOD AND SYSTEM FOR MANAGING ELECTRONIC TAGS**

(30) Priority: 06.10.2017 IT 201700112091
(71) Applicant: Nicolis, Stefano, 37069 Villafranca di Verona (VR) (IT)
(72) Inventor: Nicolis, Stefano, 37069 Villafranca di Verona (VR) (IT)
(74) Representative: Modiano, Micaela Nadia

(57) **Abstract**

A method for managing electronic tags, which entails at least a step of coupling at least one electronic tag (3) to a respective auxiliary device (1) that bears a corresponding preset unique identification code (2), a step of joining the identification code (2) of the auxiliary device (1) with the item code (101) of at least one product (100) to which the at least one electronic tag (3) is assigned, a step of initializing the electronic tag (3) and a step of transmitting to the electronic tag (3) data that relate to the product (100) assigned to that tag for the display of such data by the electronic tag (3).

## Description

The present invention relates to a method and a system for managing electronic tags.

Nowadays, in shops or at sales points in general, the use of electronic tags is known, which, generally, are constituted by a box-like body that is provided with a front face on which a display is positioned for displaying the price of the products for sale.

Typically, the electronic tags are hooked to profiled elements that are fixed to the free edge of shelves on which products are arranged in shops.

The electronic tags in use in a shop are managed and programmed to show, by way of their display, data chosen by the shopkeeper by way of an adapted management system which is installed in that shop.

In particular, the system for managing electronic tags that require initialization comprises a radiotransmission hardware infrastructure, installed in the shop, which is in communication with all the electronic tags in the shop in order to transmit data to them, such as the price of the products for which the item code has been loaded in the system, and a management software platform that allows to control and manage the electronic tags of the shop in order to be able to send, through the hardware infrastructure, to electronic tags that have been initialized with a determined item code, the price of the product corresponding to such item code.

In particular, electronic tags are known that lack their own identification barcode applied at the manufacturing stage and which, before they are used, need to be initialized, so that they can be recognized by the corresponding management system, by way of a portable initialization device which is constituted by an adapted battery-powered electrical apparatus, which is supplied for use by shop floor staff in the shop.

In particular, for the operation to initialize such tags, the initialization device, of which there is usually only one available per shop owing to its high cost, is typically taken by the shop floor staff member from its storage or recharging station, usually located at the cash desk or at the service counter of the shop, and is carried by that staff member to the position in the shop where the electronic tag to be initialized is located.

At this point, the initialization device is used by the staff member, first to read and acquire the item code printed on the packaging of the product with which the electronic tag to be initialized is to be associated, and then to transfer the acquired item code to a memory unit incorporated in the electronic tag, by way of a wireless transmission that takes place by placing the initialization device against the electronic tag for a few seconds, in order to initialize it so that it is ready to recognize and, therefore, receive and display only the data, which will subsequently be transmitted to it, relating to the products corresponding to the item code with which it has been initialized.

Subsequently, the operator must bring the initialization device to the place where a device is installed for interfacing with the initialization device, which allows to send the acquired item code to the system for managing the electronic tags in the shop, so as to add it to the item codes managed by the system, and which, through the connection to a printer, allows to print an adhesive label or sticker, for later application on the electronic tag, which bears the item code, a description of the corresponding product and any other information useful to the shop floor staff member for tracking or recognizing the product with which the electronic tag has been associated.

The drawbacks of this system arise not only from the laboriousness of loading the article codes, but also from the fact that it is rather impractical when, for a given product, a change is made to its item code, which can happen multiple times in a year when special editions or versions of certain products are put on the market, or when the products corresponding to a given item code are out of stock or no longer present in the shop, because it requires the shopkeeper to reinitialize all the electronic tags that were initialized with the item code that is no longer being used, otherwise the system, in order to update the data displayed on the electronic tags, would always have to use the same item codes, even if one or more of those codes correspond to products that are no longer available.

Another drawback derives from the fact that the space available on the electronic tags for the application of adhesive labels varies in shape and dimensions according to the model of electronic tag, and as a consequence the shape and the dimensions of the adhesive labels also changes as a function of the model of electronic tag on which they are to be applied. For these reasons, if the shop has various different models of electronic tags, the printer of the adhesive labels is set up to print, for each item code acquired by the shop floor staff member by way of the initialization device, different adhesive labels, each one adapted to a corresponding model of electronic tag present in the shop, and the staff member will then proceed to apply only the adhesive label that corresponds to the model of electronic tag that has been initialized with that determined item code, discard all the other adhesive labels that have been printed but which cannot be used, with an evident and considerable waste of material.

The aim of the present invention is to provide a method and a system for managing electronic tags which are capable of improving the known art in one or more of the above mentioned aspects.

Within this aim, an object of the invention is to provide a method and a system for managing electronic tags that enable a more convenient management of electronic tags that lack a unique identification code assigned when they were manufactured.

Another object of the invention is to provide a method and a system for managing electronic tags that allow to avoid having to print in each instance multiple adhesive labels of different shapes and dimensions.

Another object of the invention is to provide a method for managing electronic tags that is practical and convenient in execution.

Another object of the invention is to provide a system for managing electronic tags that avails of devices that are simple in construction and easy to use.

Another object of the invention is to provide an auxiliary device that allows to solve the drawbacks of the known art relating to the management of electronic tags that lack their own unique identification code.

Furthermore, another object of the present invention is to overcome the drawbacks of the known art in an alternative manner to any existing solutions.

Another object of the invention is to provide a method and a system for managing electronic tags that are highly reliable and at low cost.

This aim and these and other objects which will become better apparent hereinafter are achieved by a method for managing electronic tags according to claim 1, optionally provided with one or more of the characteristics of the dependent claims.

Further characteristics and advantages of the invention will become better apparent from the detailed description that follows of a preferred, but not exclusive, embodiment of the method and of the system for managing electronic tags according to the invention, which is illustrated for the purposes of non-limiting example in the accompanying drawings wherein:
Figure 1 is an exploded perspective view of an auxiliary device of the system according to the invention, which can be coupled to an electronic tag which in turn is designed to be coupled to a profiled supporting element;

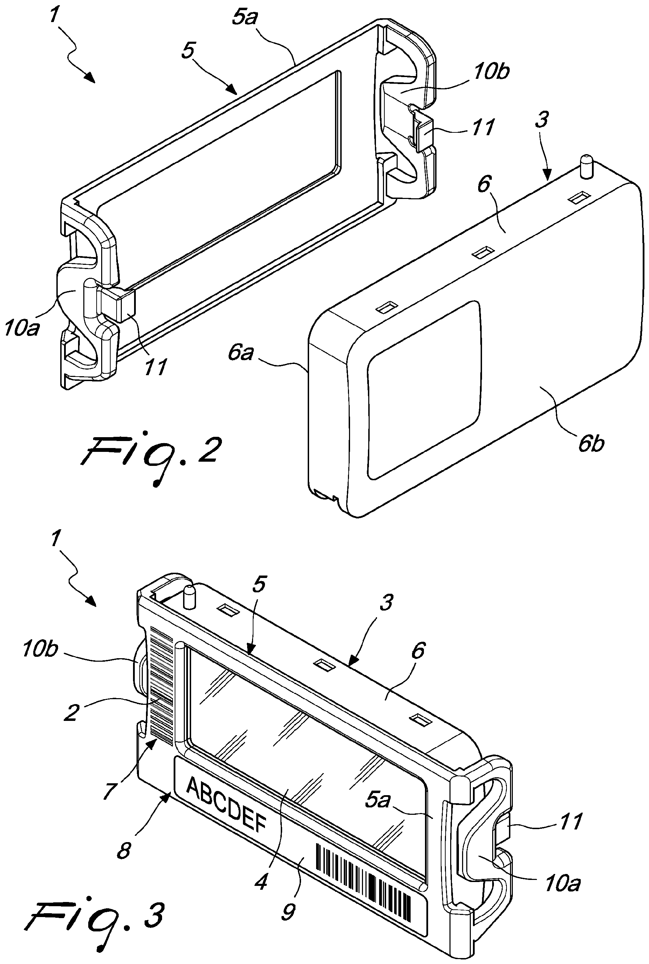

Figure 2 is an exploded perspective view of the rear portion of the auxiliary device and of an electronic tag;
Figure 3 is a perspective view of the auxiliary device coupled to an electronic tag;

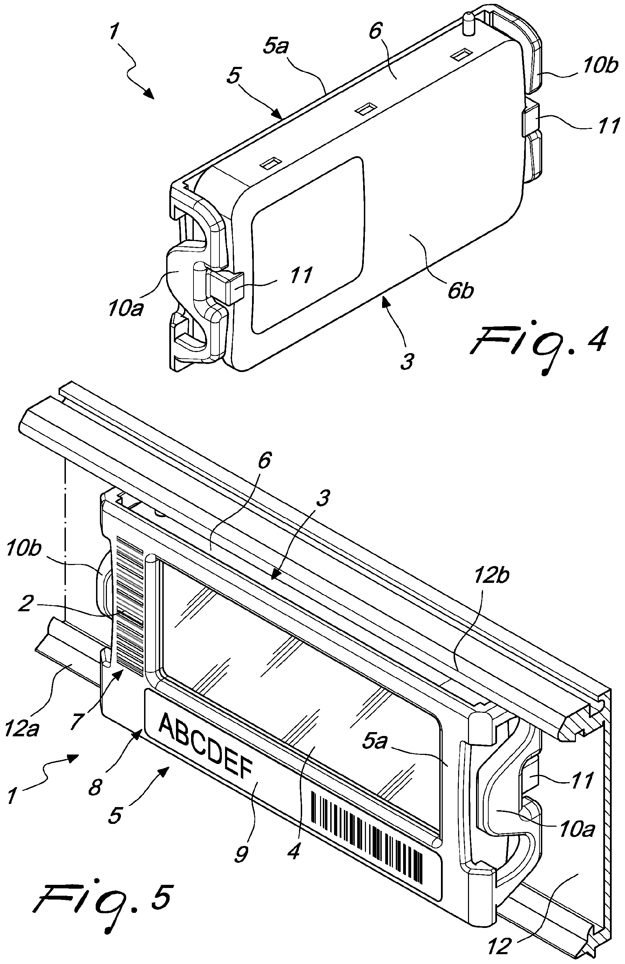

Figure 4 is a perspective view of the rear portion of an electronic tag with the auxiliary device coupled;
Figure 5 shows an electronic tag, with the auxiliary device coupled thereto, hooked to a supporting profiled element;

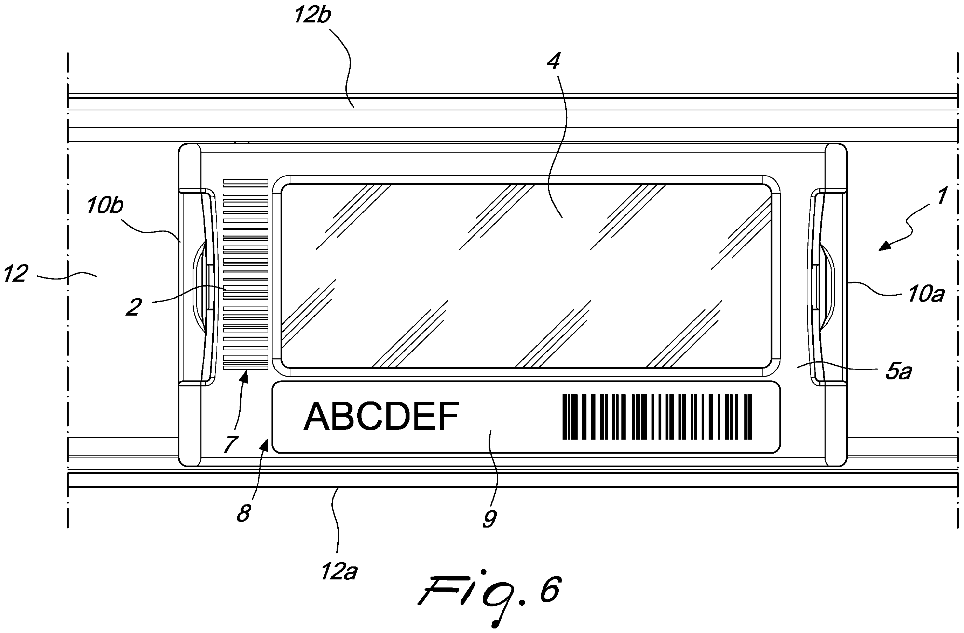

Figure 6 is a front elevation view of an electronic tag, with the auxiliary device coupled thereto, hooked to a supporting profiled element;

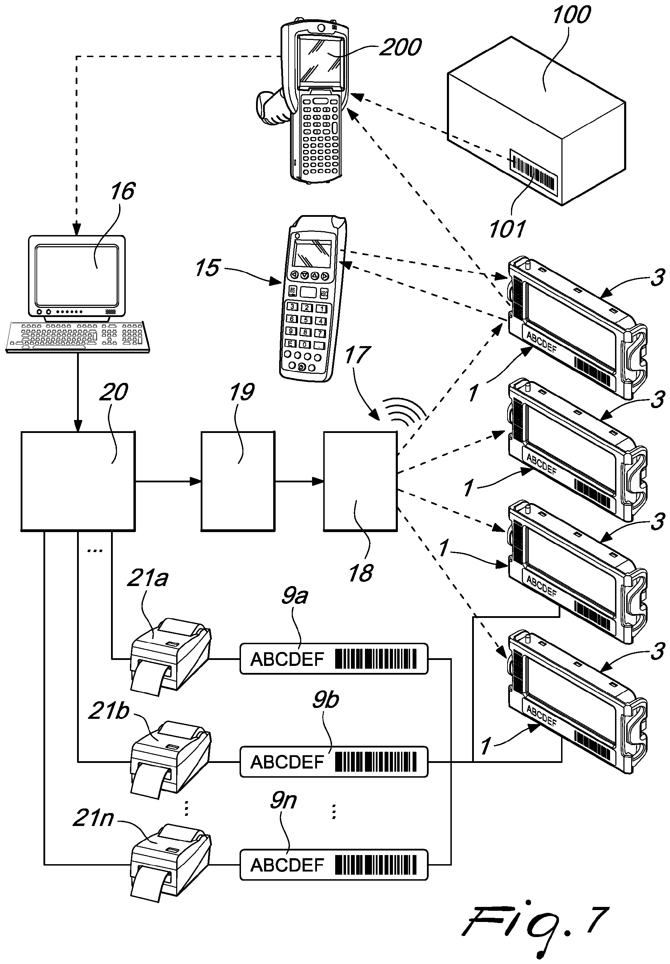

Figure 7 is a schematic view of the system according to the invention.

With reference to the figures, the method and the system according to the invention are based on the use of at least one auxiliary device, generally designated by the reference numeral 1, which bears a corresponding preset unique identification code 2, which is assigned to it by the corresponding producer, and which is coupled, externally, to a respective electronic tag 3 available to the shop, which in turn is intended to be assigned to at least one product 100 for sale in that shop, for the display of information about such product, by way of the corresponding display 4, which is arranged on the front face 6a of its box-like body 6.

In particular, the electronic tag 3 to which the auxiliary device 1 is coupled is of the type that requires, for its use, to be initialized with a code.

In detail, each auxiliary device 1 is provided, in particular, with a base body 5 that can be coupled to the box-like body 6 of the respective electronic tag 3 and which has at least one identification region 7 that supports the preset unique identification code 2, which can be, for example, a barcode.

Conveniently, the base body 5 of each auxiliary device 1 defines, furthermore, at least one informative region 8, which has, advantageously, a preset shape and size and is adapted to receive an adhesive label 9 bearing information about the product 100 to which the electronic tag 3 is assigned, to which the corresponding auxiliary device 1 is coupled.

Advantageously, both the identification region 7 and the informative region 8 have a flat shape and are adapted to be superimposed on respective portions of the front face 6a of the box-like body 6.

Conveniently, the identification region 7 and the informative region 8 are arranged so as to be superimposed on portions of the front face 6a of the electronic tag 3 which are located around the display 4 and, more specifically, the identification region 7 is, advantageously, arranged so as to be positioned beside a lateral side of the display 4, while the informative region 8 is preferably positioned so as to be below the display 4.

In more detail, the base body 5 has a front portion 5a, which can face the front face 6a of the box-like body 6 of the electronic tag 3 and defines both the identification region 7 and the informative region 8, and also a pair of lateral engagement wings 10a and 10b, which are mutually opposite and protrude from the front portion 5a and can engage with the mutually opposite lateral sides of the box-like body 6 of the electronic tag 3.

More specifically, the two lateral engagement wings 10a and 10b are elastically flexible and have, at their free end, respective retention teeth 11 which can engage with the rear face 6b of the box-like body 6 of the electronic tag 3, in order to allow to snap-couple the auxiliary device 1 to the box-like body 6 of the electronic tag 3.

Advantageously, the base body 5 of the auxiliary device 1 is made of transparent plastic material and the identification code 2 is shown on the base body 5 by way of directly printing it onto the identification region 7 of the base body 5.

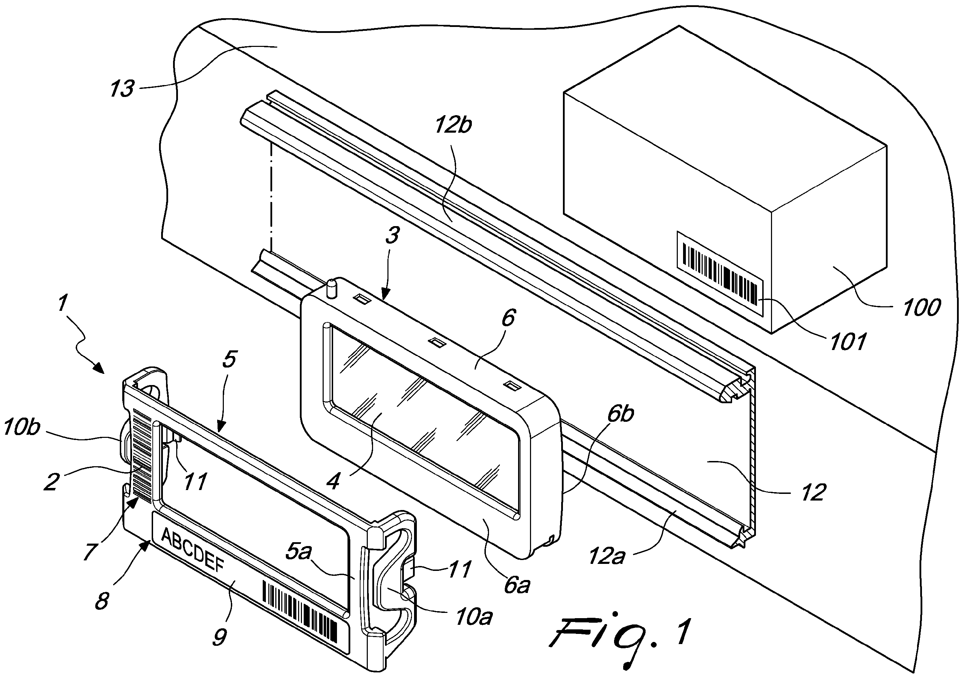

Conveniently, the electronic tag 3 with the auxiliary device 1 coupled thereto can be coupled, as usual, to a supporting element, such as, for example, a supporting profiled element 12, which, as shown in Figure 1 by way of example, is fixed to a shelf 13, on which are arranged the product or products 100 to which the electronic tag 3 is assigned. In particular, the coupling of the auxiliary device 1 does not hinder the coupling of the electronic tag 3 to the lower and upper engagement wings 12a and 12b of the supporting profiled element 12.

The method according to the invention entails, initially, coupling a respective auxiliary device 1 to the electronic tag 3.

The method according to the invention then entails that the shop floor staff member carries out a step of initializing the electronic tag 3 which consists of transmitting the identification code 2 shown on the auxiliary device 1 to a memory unit incorporated in the electronic tag 3.

Such step of initializing is carried out by the shop floor staff member by way of a portable acquisition and setup device 15, which is provided with means for reading and acquiring codes 15a, such as, for example, a barcode reader, and is provided with means for data entry 15b that allow to transfer the acquired identification code 2 from a distance to the memory unit of the electronic tag 3.

It should be noted that the acquisition and setup device 15 can be constituted by an adapted initialization device which may already be in use at the shop for initializing electronic tags 3.

Subsequently, the identification code 2 of the auxiliary device 1 is associated with the item code 101 shown on the product 100 to which the electronic tag 3 is assigned, so as to create a correlation or link between the identification code 2 of the auxiliary device 1 and the item code 101 of the product 100 to which the electronic tag 3 has been assigned.

Such joining step entails, conveniently, a step of reading and acquiring the item code 101 and the identification code 2 of the auxiliary device 1.

This step of reading and acquiring is carried out by the shop floor staff member by way of a code reading device 200, which is conveniently different from the portable acquisition and setup device 15 used to initialize the electronic tag 3.

In particular, such code reading device 200 can be, advantageously, constituted by a portable barcode reader provided with means for wireless communication.

The step of reading and acquiring is followed by a step of creating a data connection between the acquired identification code 2 and the acquired item code 101, in a database.

Conveniently, such database is hosted and managed by a central server or back-office server 16, located preferably in the back-office of the shop, with which the code reading device 200 is capable of interfacing, by way of wireless communication, in order to be able to download the acquired codes into the database. The central server 16 can advantageously accommodate a management software package that allows the shop floor staff member to manage the products 100 that are present in the shop.

In the database, by way of data entry interfaces of the central server 16, data or information that relate to the products 100 to which the codes acquired by the reading device 200 refer are entered and linked to those codes, such data or information consisting of price, promotions, quantity, origin, suppliers or the like.

The method according to the invention therefore entails a step of transmitting to the initialized electronic tag 3 the data or the information about the product 100 assigned to it and entered in the database, in order to enable the display of such data or information by the electronic tag 3 by way of the corresponding display 4.

In order to carry out the step of transmitting the data to the initialized electronic tag 3, the system according to the invention is provided with transmission means 17, which are, conveniently, connected to the central server 16 or which can, optionally, interface with the reading device 200, and which are capable of transmitting, from a distance and by way of wireless communication, to the electronic tag 3, the data or the information about the product 100 that have been entered into the database for the identification code 2 and for the item code 101.

In particular, the transmission means 17 are capable of transmitting a data packet or file to each electronic tag 3, which comprises, conveniently, a data string composed of a recognition header, which contains the code used to initialize the electronic tag 3, so as to enable the electronic tag 3 to recognize the corresponding data string, and a trailer containing the data or the information that the shopkeeper wants to be displayed by the electronic tag 3.

For example, the transmission means 17 comprise a radiofrequency transmitter 18 which is capable of communicating with each electronic tag 3.

According to a possible embodiment, the radiofrequency transmitter 18 is connected to a data server 19 which, in turn, is connected to the central server 16 through a processing unit or controller 20, which contains a conversion or transcoding table between the item code 101 and the identification code 2 of the auxiliary device 1.

In this manner, it is, for example, possible to proceed to initialize each one of the electronic tags 3 that are present in the shop with the identification code 2 shown on the auxiliary device 1 coupled to them, while still continuing to manage the database of the server 16 using the item code 101 of the products, as in conventional systems.

In this case, in practice the central server 16 will transmit files containing the item codes 101 of the products 100 and the related information, which will be received by the processing unit 20. The processing unit 20 will process the files received, using the conversion table, inserting the identification codes 2 of the accessory devices 1 corresponding to the item codes 101, and will then proceed to transmit the processed files to the data server 16, which, by way of the radiofrequency transmitter 18, will in turn transmit them to the corresponding electronic tag 3, so that the latter will display the information about the corresponding products 100.

The method according to the invention also entails a step of printing the adhesive label 9 showing information about the product 100 and a step of applying the printed adhesive label 9 on the auxiliary device 1 that is coupled to the electronic tag 3 assigned to the product 100 and, more precisely, on its informative region 8.

The printing of the adhesive labels 9 is, conveniently, done by way of a printer, connected to the central server 16, for example by way of the processing unit 20, which is capable of printing adhesive labels 9 in the format suitable for application of the labels on the informative region 8 of the auxiliary device 1.

It should be noted that by way of the method and the system according to the invention adhesive labels 9 of a single format can be used, i.e. of the dimensions and shape adapted to the application thereof on the informative region 8 of the accessory devices 1 that are coupled to the electronic tags 3 in the shop.

Conveniently, the printer can be networked and be connected to an Ethernet network so that it can be located in the area that is most convenient for the shopkeeper.

Optionally, there can be multiple printers 21a, 21b, ..., 21n, located in various points of the shop, in order to enable the shopkeeper, by way of a print command, to choose, for printing the adhesive labels 9a, 9b, ..., 9n, the nearest and most convenient printer with respect to the electronic tag 3 on whose auxiliary device 1 the adhesive label is to be applied.

In practice it has been found that the invention fully achieves the intended aim and objects, in that it makes possible a more practical management of the electronic tags, in particular of those that require initialization.

In particular, by virtue of the system according to the invention it is possible to use the initialization device just once, i.e. to initialize the electronic tag with the identification code shown on the auxiliary device, after which there will be no further need to initialize the electronic tag with the item code, but only to create a link, based on a transcoding table or a database, between the identification code and the item code.

The invention, thus conceived, is susceptible of numerous modifications and variations, all of which are within the scope of the appended claims. Moreover, all the details may be substituted by other, technically equivalent elements.

Thus, for example, the code reading device 200 can be constituted by a conventional handheld code reading terminal with wireless communication that is capable of creating in real time the link between the item code and the identification code of the auxiliary device with which the electronic tag is initialized and, optionally, is also capable of immediately printing the adhesive label automatically, thus speeding up the update times.

In this manner, the system can immediately search the database for the item code read and check that it exists, thus avoiding pairing an electronic tag with a non-existent item, as can happen with conventional systems, where if the item is not present in the database then a blank adhesive label will be printed and so it is necessary to subsequently repeat the operation.

In practice, the materials used, as well as the contingent shapes and dimensions, may be any according to the requirements and to the state of the art.

The disclosures in Italian Patent Application No. 102017000112091 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for managing electronic tags, **characterized in that** it entails at least a step of coupling at least one electronic tag (3) to a respective auxiliary device (1) that bears a corresponding preset unique identification code (2), a step of initializing said at least one electronic tag (3) with said identification code (2) of said auxiliary device (1), a step of joining said identification code (2) of said auxiliary device (1) with the item code (101) of at least one product (100) to which said at least one electronic tag (3) is assigned, and a step of transmitting to said at least one electronic tag (3) data that relate to said at least one product (100) assigned to said tag for the display of said data by said at least one electronic tag (3).

2. The method according to claim 1, **characterized in that** said joining step entails a step of reading and acquiring said identification code (2) of said auxiliary device (1) by way of a code reading device (200), a step of reading and acquiring said item code (101) by way of said code reading device (200), and a step of creating a data link between said acquired identification code (2) and said acquired item code (101) in a database.

3. The method according to one or more of the preceding claims, **characterized in that** said step of initializing entails the transmission, in a memory unit incorporated in said at least one electronic tag (3), of said identification code (2) by way of an acquisition and setup device (15).

4. The method according to one or more of the preceding claims, **characterized in that** it entails a step of printing an adhesive label (9) that bears information relating to said at least one product (100) and applying said adhesive label (9) on said auxiliary device (1).

5. A system for managing electronic tags, **characterized in that** it comprises at least one auxiliary device (1) that can be coupled to at least one respective electronic tag (3) assigned to at least one product (100) and which bears a preset unique identification code (2), a portable acquisition and setup device (15) provided with means (15a) for reading and acquiring said identification code (2) and with means for introducing said identification code (2) acquired by way of said means for reading into the memory unit incorporated in said at least one electronic tag (3) for the initialization of said at least one electronic tag (3) with said identification code (2), a code reading device (200) adapted to read said identification code (2) of said auxiliary device (1) and the item code (101) of at least one product (100) to which said at least one electronic tag (3) is assigned in order to link said identification code (2) to said item code (101), and means for transmitting (17) to said at least one electronic tag (3) data correlated with said at least one product (100) for the display of said data by said electronic tag (3).

6. The management system according to claim 5, **characterized in that** it comprises a processing unit (20) which is connected to a central server (16) in order to receive from said central server (16) a file that contains a code that is different from the one entered in said memory unit, and at least one item of information relating to said at least one product (100), said processing unit (20) being adapted to process said file according to a conversion table in order to insert into said file the code entered in said memory unit, said processing unit being connected to a data server (19) in order to transmit the processed file to said data server, said data server (19) being connected to a radiofrequency transmitter (18) which is adapted to communicate with said at least one electronic tag (3), in order to transmit the file received from said processing unit (20) to said at least one electronic tag (3) for the display of said at least one item of information.

7. An auxiliary device for managing electronic tags, **characterized in that** it comprises a base body (5) which can be coupled to the box-like body (6) of an electronic tag (3) and is provided with at least one identification region (7) which supports a preset unique identification code (2).

8. The auxiliary device according to claim 7, **characterized in that** said base body (5) defines at least one informative region (8) which is adapted to receive an adhesive label (9) which bears information relating to the product (100) to which said electronic tag (3) is assigned.

9. The auxiliary device according to one or more of claims 7 to 8, **characterized in that** said identification region (7) and said informative region (8) have a flat shape and are adapted to be superimposed on the front face (6a) of the box-like body (6) of said electronic tag (3).

10. The auxiliary device according to one or more of claims 7 to 9, **characterized in that** said base body has a front portion (5a), which can face the front face (6a) of the box-like body (6) of said electronic tag (3) and defines said identification region (7) and said informative region (8), and a pair of lateral engagement wings (10a, 10b), which are mutually opposite and can engage with the mutually opposite lateral sides of the box-like body (6) of said electronic tag (3).
